# EUROPEAN PATENT APPLICATION

(11) **EP 2 131 105 A1**
(43) Date of publication of application: **09.12.2009**
(21) Application number: 08300220.4
(22) Date of filing: 05.06.2008
(51) Int. Cl.: F22B 1/18, F22B 3/04, F22B 3/08, F01K 21/00, F01K 25/00, F01K 25/10, F01K 25/08, F01D 25/32

(54) **Process to convert low grade heat source into power using a two-phase fluid expander**

(71) Applicant: L'Air Liquide Société Anonyme pour l'Etude et l'Exploitation des Procédés Georges Claude, 75007 Paris (FR)
(72) Inventor: Tranier, Jean-Pierre, 94240 L'Hay Les Roses (FR)
(74) Representative: Mercey, Fiona Susan

(57) **Abstract**

A process to convert a heat source into power is set forth within. This process involves heating an elevated pressure liquid working fluid (120) by indirect heat exchange against a heat source (114), wherein, at the end of this step, the heated working fluid (122) remains substantially in the liquid state. This process further involves expanding the heated working fluid (122) in a nozzle (123) to create a two-phase high velocity fluid (124). This process further involves work expanding the resulting heated, two-phase working fluid in a two-phase fluid expander (125) to generate a high pressure liquid stream (127), a low pressure vapor stream (126), and power. The process further involves condensing the low pressure vapor stream (126) by indirect heat exchange against a cooling fluid, increasing the pressure of this condensate, and re-combining the resultant condensate (128) with the high pressure liquid (127) to prepare the working fluid (120) for a new cycle.

## Description

Heat can be converted into power by the well known Rankine cycle as follows:
- Step 1:: pumping a liquid working fluid to an elevated pressure;
- Step 2:: heating the resulting elevated pressure liquid working fluid by indirect heat exchange against the heat source where said heating results in: (a) boiling the working fluid; and (b) preferably superheating the boil-off to a sufficient degree to ensure the working fluid remains substantially in the vapor state throughout step 3's work expansion step;
- Step 3:: work expanding (defined herein as expanding at substantially constant entropy) the resulting heated working fluid in a turbine expander;
- Step 4:: condensing the work expanded working fluid by heat exchange against cooling water to prepare the working fluid for a new cycle of steps 1 through 3.

In another variation, the thermodynamic efficiency of step 3's work expansion step is increased by using a multi-stage expander where the working fluid is re-heated against the heat source between stages.

In another variation, the working fluid is preheated against a low grade heat source prior to boiling the working fluid against a higher grade heat source (See for example US-A-3950949 and US-A-4182127).

The present invention differs from the conventional application of the Rankine cycle in a significant way. In particular, instead of requiring the heat source to be of sufficiently high temperature or "high grade" to boil/superheat the working fluid in step, a two-phase fluid expander is utilized in step 3.

Accordingly, the present invention is suitable for relatively low or "low grade" heat sources that are incapable of boiling/superheating the working fluid in step 1 in order to achieve an economically viable solution.

In addition to its applicability to low grade heat, the present invention also avoids the thermodynamic penalty associated with employing a boiling liquid to recover heat. (See for example EP-A- 1389672 which utilizes boiling fluid to recover low grade heat of compression.) In particular, since a liquid boils at a constant temperature, the associated heat exchanger has large temperature differences between the hot and cold streams which the present invention avoids.

Of course, as the skilled practitioner can readily appreciate, there is a thermodynamic penalty associated with the present invention's work expansion of a gas vis-a-vis the conventional work expansion of a vapor. However, recent advances in two-phase fluid expanders, coupled with the ever increasing energy costs, are working to justify the present invention's use a two phase fluid expander to convert low grade heat sources into power. Examples of such low grade heat include compressor discharge, geothermal sources (such as hot spring) and the heat from solar collectors.

In the past, the application of two-phase dense fluid expanders has been limited to refrigeration cycles where, prior to work expanding the working fluid, the working fluid is cooled (e.g. to take advantage of refrigeration producing effect when a fluid is work expanded) instead of heated as in present cycle. For example, US-A-5564290 teaches use of a two-phase dense fluid expander in an air separation plant. US-A- 6763680 teaches expanding liquid natural gas in a two-phase dense fluid expander. Two-phase dense fluid expanders have also been proposed in a standard vapor compression refrigeration cycle as a replacement for a throttle (Joule-Thompson) valve.

Also prior to the instant invention, the application of two-phase fluid expanders has been limited to applications such as geothermal wells, where the percentage of liquid phase water in the steam is greater than the what a traditional steam turbine will be able to tolerate without profoundly effecting reliability and performance (typically 10% to 12% liquid at the exhaust). Often in geothermal well applications the liquid percentage can be over 50% at the inlet of the turbine. US. Pat. No. 5,385,446 describes such a two-phase fluid expander, and suggests that a primary application would be geothermal wells.

US-A-2006-0225423 proposes the use of a dense fluid expander to generate power from a low grade heat source. The main drawback of this solution is the limitation that to recover the liquid phase at high pressures necessitates the need of a separator and a large liquid pump. This increases the capital cost, operating cost, and maintenance cost of the associated facility, as well as adding a parasitic energy load on the system, thereby reducing the overall plant efficiency. It is therefore the intent of the instant invention to provide a solution that does not require a two-phase separator or a large liquid pump, thereby improving the overall cost and efficiency of the system. One example of a two-phase expander that may be used in connection with the instant invention is disclosed in US-A-3879949.

The present invention is a process to convert a heat source into power comprising:
- Step 1: heating an elevated pressure liquid working fluid by indirect heat exchange against a heat source, wherein, at the end of this step, the working fluid remains substantially in the liquid state;
- Step 2:: expanding the liquid in at least one nozzle to create a two-phase high velocity fluid,
- Step 3 :: work expanding the resulting heated , two-phase working fluid in a two-phase fluid expander to generate a high pressure liquid, a low pressure gas, and power; and
- Step 4:: condensing the low pressure gas from step 3 by indirect heat exchange against a cooling fluid, increasing the pressure of this condensate, and re-combining the resultant condensate with the high pressure liquid from step 3 to prepare the working fluid for a new cycle of steps 1 through 3.

The invention may be understood by reference to the following description taken in conjunction with the accompanying drawings, and in which :
Figure 1 is a schematic representation of one embodiment of the present invention.
Figure 2 is a schematic representation of another embodiment of the present invention.
Figure 3 is a schematic representation of another embodiment of the present invention.
Figure 4 is a schematic representation of another embodiment of the present invention.

The present invention is a process to convert a heat source into power comprising:
- Step 1: heating an elevated pressure liquid working fluid by indirect heat exchange against a heat source, wherein, at the end of this step, the working fluid remains substantially in the liquid state;
- Step 2:: expanding the liquid in at least one nozzle to create a two-phase high velocity fluid,
- Step 3 :: work expanding the resulting heated , two-phase working fluid in a two-phase fluid expander to generate a high pressure liquid, a low pressure gas, and power; and
- Step 4:: condensing the low pressure gas from step 3 by indirect heat exchange against a cooling fluid, increasing the pressure of this condensate, and re-combining the resultant condensate with the high pressure liquid from step 3 to prepare the working fluid for a new cycle of steps 1 through 3.

As used herein, the term liquid is primarily intended to refer to a subcritical liquid (i.e. a liquid below both its critical pressure and critical temperature).

As used herein, the term 'high velocity' is defined as a velocity between 25 and 500 m/s, preferably between 40 and 125 m/s, more preferably between 50 and 100 m/s, more preferably between 60 and 90 m/s.

Accordingly, in one embodiment of the present invention, the liquid is a subcritical liquid throughout the entire cycle.

However, the use of a "supercritical liquid" (defined herein as fluid at supercritical pressure but subcritical temperature) is also within the scope of the present invention. Accordingly, in another embodiment of the present invention (hereafter, the partial supercritical embodiment), the liquid working fluid is at a supercritical pressure as it is introduced in step 1 and is heated to a temperature below its supercritical temperature in step 1. (Contrast this partial supercritical embodiment with supercritical variation of Rankine cycle discussed under Background section where the supercritical pressure working fluid that is introduced in step 1 is heated to a temperature above its supercritical temperature in step 1).

Moreover, other embodiments may comprise one or more of the following features.

In another embodiment of the present invention, the heat source is at temperature below 150 °C, with this temperature being optionally below 100 °C.

In another embodiment of the present invention, the heat source is at low grade heat source comprising the discharge from a compressor.

In another embodiment of the present invention, the cooling fluid used in step 4 comprises cooling water.

In another embodiment of the present invention, the cooling fluid used in step 4 comprises ambient air.

In another embodiment of the present invention, the working fluid comprises ammonia.

In another embodiment of the present invention, the working fluid comprises refrigerant R-134a.

In another embodiment of the present invention, the working fluid comprises refrigerant R-245fa.

In another embodiment of the present invention, the working fluid comprises at least two components mixed together.

According to one aspect of the invention, there is provided a process to convert a heat source into power comprising :
- heating an elevated pressure liquid phase working fluid stream by indirect heat exchange against a heat source, wherein after said heat exchange said heated working fluid stream remains substantially in the liquid phase ;
- adiabatically expanding said heated working fluid stream to create a two-phase high velocity fluid stream;
- work expanding said two-phase high velocity stream in a two-phase fluid expander, thereby generating a high pressure liquid stream, a low pressure vapor stream, and excess power;
- condensing said low pressure vapor stream by indirect heat exchange with a cooling fluid, thereby creating a condensate stream;
- increasing the pressure of said condensate stream, thereby creating a high pressure condensate stream; and
- combining said high pressure condensate stream and said high pressure liquid stream, thereby creating said elevated pressure liquid phase working fluid.

According to further optional aspects of the invention:
- the liquid is a subcritical liquid throughout the entire cycle.
- said elevated pressure liquid phase working fluid stream has a pressure in the supercritical range, and is heated to a temperature below the supercritical range.
- said heat source is at a temperature below 100 °C, or even below 150 °C.
- said heat source is a low grade heat source comprising the discharge from a compressor.
- said heat source is a low grade heat source comprising the discharge from a compressor used for the separation of industrial gases selected from the group consisting of N2, Ar, 02, CO, CO2, and H2.
- said heat source is a low grade heat source derived from a process using industrial gases selected from the group consisting of N2, Ar, 02, CO, CO2, and H2.
- said cooling fluid comprises cooling water.
- said cooling fluid comprises ambient air.
- said working fluid comprises ammonia.
- said working fluid comprises refrigerant R-134a.
- said working fluid comprises refrigerant R-245fa.
- said working fluid comprises at least two components mixed together.
- said work expanding further comprises:
   - work expanding said two-phase high velocity fluid stream to an intermediate pressure in a first two-phase fluid expander to generate a high pressure liquid stream, an intermediate low pressure vapor stream, and at least a portion of said excess power;
   - heating said intermediate low pressure vapor stream by indirect heat exchange against said heat source;
   - further work expanding said intermediate low pressure vapor stream in a second two-phase fluid expander to generate at least said low pressure vapor stream and at least a second portion of said excess power; and
   - further work expanding said high pressure liquid stream in a third two-phase fluid expander to generate at least a third portion of said excess power.

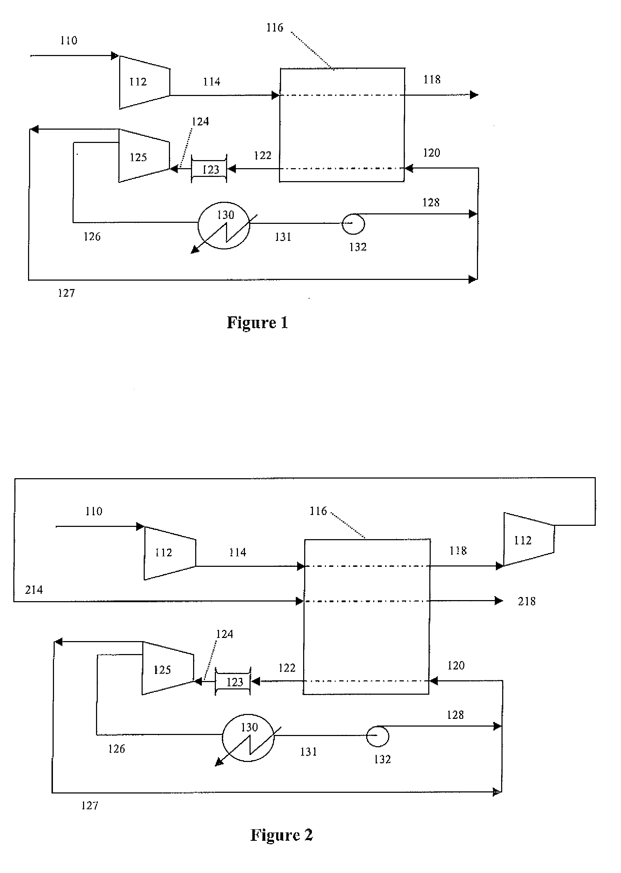

Referring to the embodiment of the present invention depicted in FIG. 1, gas stream **110** is compressed in compressor **112,** resulting hot steam **114** is cooled in the heat recovery exchanger **116,** and exits the exchanger as stream **118.** Liquid working fluid **120** is heated in **116** by indirect heat exchange against stream **114.** The resulting substantially liquid stream **122** is expanded in nozzle **123,** there by resulting in two-phase flow **124.** Two-phase flow **124** is then introduced into two-phase fluid rotating expander **125** wherein there is a phase separation. The velocity of the vapor phase of stream **124** is used to produce work within two-phase fluid rotating expander **124,** and the velocity of the liquid phase of stream **124** is converted into a higher pressure for the liquid stream. Nozzle 123 and rotating expander 124 can typically be combined in a single casing machine.

Two-phase fluid expander **124** has two output streams, output vapor stream **126** and output liquid stream **127.** Output vapor stream **126** is comprised primarily of low pressure vapor phase, but may contain some entrained liquid. Output liquid stream **127** is comprised primarily of high pressure liquid phase, but may contain some entrained vapor. Output vapor stream **126** is completely condensed in condenser **130.** The resulting liquid **131** is pumped in pump **132** to produce stream **128.** Output liquid stream **127** is combined with stream **128,** to produce liquid working fluid stream **120,** which begins the cycle anew. Compressor **112** can be single-stage or multiple stages with intercoolers or without intercoolers (adiabatic compression). The power recovery system can be present from the beginning or added as a retrofit.

The embodiment presented in FIG. 2 is similar to the embodiment presented in FIG. 1 (corresponding streams and equipment are identified with the same numbers) except the heat is recovered from a multiple stage compressor. In particular, compressed, cooled gas stream **118** is now compressed for the second time in compressor **212.** The resulting hot stream **214** is cooled in **116** and exits the exchanger as stream **218.**
Multiple heat exchangers can be used in place of a single exchanger **116** with working fluid distributed between the exchangers.

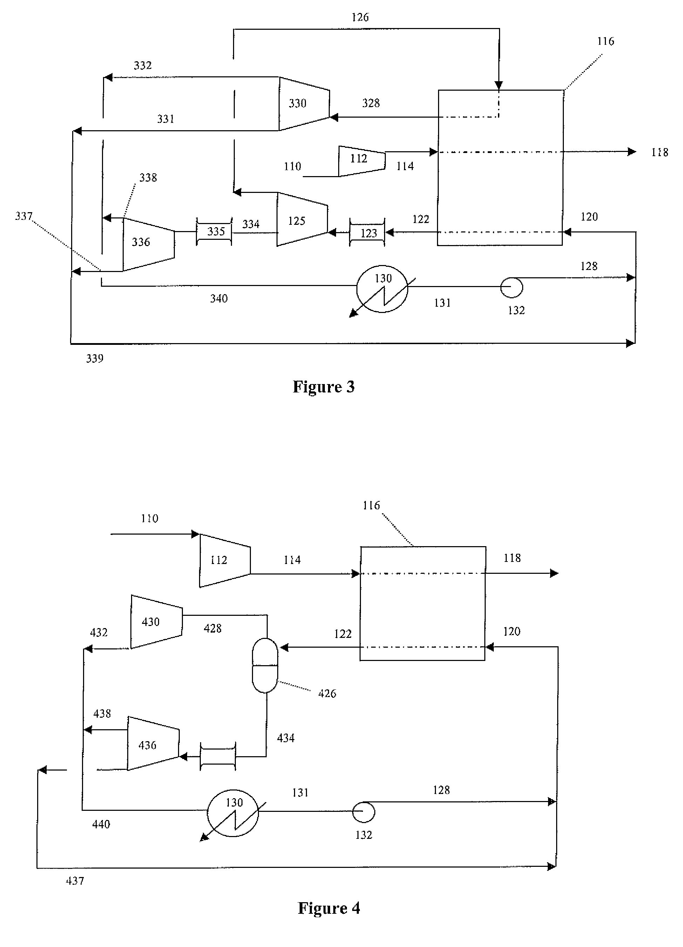

The embodiment presented in FIG. 3 is similar to the embodiment presented in FIG. 1 (corresponding streams and equipment are identified with same numbers) except that output vapor stream of **126,** now at an intermediate pressure, is reheated in **116** and expanded in vapor expander **330** to generate additional power and produce stream **332.** Output liquid stream **334** is expanded in additional dense fluid expander **336** to generate more power to produce two output streams, second output vapor stream **338** and second output liquid stream **337.** Streams **332** and **338** are combined to produce stream **340** that is completely condensed in condenser **130,** thereby producing condensate stream **131.** Condensate stream **131** is pumped in pump **132** to produce stream **128.** Streams **331** and **337** are combined to produce stream **339.** Streams **339** and **128** are combined to produce working fluid stream **120.** Note, it is possible to further increase the pressure of combined stream **339,** to create an elevated pressure liquid phase working liquid.

The embodiment presented in FIG. 4 is similar to the embodiment presented in FIG. 1 (corresponding streams and equipment are identified with same numbers) except a vapor portion of stream **122,** after being separated in phase separator **426,** is expanded in vapor expander **430** to generated additional power and produce stream **432.** The liquid portion **434** is expanded in two-phase fluid expander **436** to generate more power. Two-phase fluid expander **436** has two output streams, a second output vapor stream 438 and a second output liquid stream **437.** Streams **432** and **438** are combined to produce stream **440** that is completely condensed in condenser **130,** thereby producing condensate stream **131.** Condensate stream **131** is pumped in pump **132** to produce stream **128.** Stream **437** is combined with stream **128** to produce working fluid stream **120.**

The configurations shown in FIGS. 3 and 4 recover slightly more power than the configuration shown in FIG. 1 and may also help overcome mechanical limitations of how much vapor can be allowed at the discharge of a dense fluid expander

Illustrative embodiments have been described above. While the process in the present application is susceptible to various modifications and alternative forms, specific embodiments thereof have been shown by way of example in the drawings, and have been herein described in detail. It should be understood, however, that the description herein of specific embodiments is not intended to limit the process in the present application to the particular forms disclosed, but on the contrary, the process in the present application is to cover all modifications, equivalents, and alternatives falling within the spirit and scope of the process in the present application, as defined by the appended claims.

It will, of course, be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming, but, would nevertheless, be a routine undertaking for those of ordinary skill in the art, having the benefit of this disclosure.

## Claims

1. A process to convert a heat source into power comprising :
• heating an elevated pressure liquid phase working fluid stream (120) by indirect heat exchange against a heat source (114), wherein after said heat exchange said heated working fluid stream (122) remains substantially in the liquid phase ;
• adiabatically expanding said heated working fluid stream (122) to create a two-phase high velocity fluid stream (124);
• work expanding said two-phase high velocity stream (124) in a two-phase fluid expander (125), thereby generating a high pressure liquid stream (127), a low pressure vapor stream (126), and excess power;
• condensing said low pressure vapor stream (126) by indirect heat exchange with a cooling fluid, thereby creating a condensate stream (131);
• increasing the pressure of said condensate stream (131), thereby creating a high pressure condensate stream (128); and
• combining said high pressure condensate stream (128) and said high pressure liquid stream (127), thereby creating said elevated pressure liquid phase working fluid (120).

2. The process of claim 1 wherein the liquid is a subcritical liquid throughout the entire cycle.

3. The process of at least one preceding claim, wherein said elevated pressure liquid phase working fluid stream has a pressure in the supercritical range, and is heated to a temperature below the supercritical range.

4. The process of at least one preceding claim, wherein said heat source is at a temperature below 100 °C.

5. The process of Claim 4, wherein said heat source is at a temperature below 150 °C.

6. The process of at least one preceding claim, wherein said heat source is a low grade heat source comprising the discharge from a compressor.

7. The process of Claim 6, wherein said heat source is a low grade heat source comprising the discharge from a compressor used for the separation of industrial gases selected from the group consisting of N2, Ar, 02, CO, CO2, and H2.

8. The process of at least one of claims 1-5, wherein said heat source is a low grade heat source derived from a process using industrial gases selected from the group consisting of N2, Ar, 02, CO, CO2, and H2.

9. The process of at least one preceding claim, wherein said cooling fluid comprises cooling water.

10. The process of at least one of claims 1-8, wherein said cooling fluid comprises ambient air.

11. The process of at least one preceding claim, wherein said working fluid comprises ammonia.

12. The process of at least one of claims 1-10, wherein said working fluid comprises refrigerant R-134a.

13. The process of at least one of claims 1-10, wherein said working fluid comprises refrigerant R-245fa.

14. The process of at least one of claims 1-10, wherein said working fluid comprises at least two components mixed together.

15. The process of at least one preceding claim, wherein said work expanding further comprises:
• work expanding said two-phase high velocity fluid stream (124) to an intermediate pressure in a first two-phase fluid expander (125) to generate a high pressure liquid stream (334), an intermediate low pressure vapor stream (126), and at least a portion of said excess power;
• heating said intermediate low pressure vapor stream (126) by indirect heat exchange against said heat source (116);
• further work expanding said intermediate low pressure vapor stream (328)in a second two-phase fluid expander (330) to generate at least said low pressure vapor stream (332) and at least a second portion of said excess power; and
• further work expanding said high pressure liquid stream (334) in a third two-phase fluid expander (336) to generate at least a third portion of said excess power.
